# EUROPEAN PATENT APPLICATION

(11) **EP 0 774 429 A1**
(43) Date of publication of application: **21.05.1997**
(21) Application number: 96850192.4
(22) Date of filing: 13.11.1996
(51) Int. Cl.: B65G 47/46, B65G 17/34

(54) **High-speed high-volume conveying apparatus with vertically superimposed article-carrying belts**

(30) Priority: 16.11.1995 IT MI952360
(71) Applicant: SANDVIK AKTIEBOLAG, 811 81 Sandviken (SE)
(72) Inventor: Tacchi, Renato, 21015 Lonate Pozzolo-VA (IT)
(74) Representative: Taquist, Lennart

(57) **Abstract**

A high-speed, high-volume conveying apparatus for small articles includes a rail (2) on which dollies (1) are mounted for movement to transfer articles from a loading station to a selected one of a plurality of collection stations disposed along the rail (2). Each dolly (1) includes at least one pair of vertically superimposed driven endless belts (30,3L,30',3L') for receiving articles (4) at the loading station and discharging them at the collection station. Each collection station may include vertically superimposed collection devices (50,5L) for receiving articles (4) from respective ones of the endless belts.

## Description

### Background of the Invention

The invention relates to the high-speed, high-volume conveying of small articles, for example postal envelopes or parcels in mail order selling organizations, where a high number of articles with limited size and weight, such as parcels, books and the like, are to be conveyed rapidly to respective collection stations along the conveying line and then transferred thereto.

Various kinds of switching plants are known; in particular from British Patent No. GB 2,111,933 of the present assignee there is known an apparatus comprising a plurality of dollies or transport devices that are moved along a fixed conveying path. Each dolly is provided with a rotary mat, i.e., endless belt, which forms a transportation platform for an article. The mat is actuated at the respective collection station in order to discharge the article towards a preset collecting bin.

These machines have been the object of further developments and improvements aiming at achieving a precise control of both the loading and the discharge trajectories of the articles, said improvements being described in patcnts EP 0 343,612 and EP 0 343,613. A remarkable degree of sophistication has thus been reached that allows the performance or productivity of these kinds of machines to be increased. The performance or productivity is rated as the number of articles handled per unit time, to the point that today in a plant with about 400 dollies, up to 10,000-12,000 articles per hour can be transferred.

The performance of machines of this kind is actually limited by mechanical problems in that it is not possible, or anyway not cost-effective nor easily realized, to increase the advancement speed of the dollies beyond the current limits, so that the productivity of about 12,000 articles per hour can be considered as the upper limit of the current machines. Yet the market demands faster machines with higher productivity, which has resulted in various proposals.

A first such proposal involves a transport device comprised of two machines arranged in parallel, i.e., two carrousels, each comprising a certain number of dollies, with the articles being fed to these machines at their own loading stations. This solution allows the productivity of the plant to be markedly increased, but exhibits the drawback that twice as many collection stations are needed, and that the transport device must travel to two loading stations during each trip. This proposal is therefore only convenient when the number of destinations is limited, so that it is not too expensive to provide twicc the number of collection stations and then gather the articles after transferring them.

Another known proposal consists in combining with each transport device two loading stations, the first loading station being arranged at the beginning of the conveying path and the second loading section being arranged half way along the path. A pre-selection of the objects is performed so as to send to the first loading station the objects that are to be discharged along the first half of the conveying path, with the other articles being sent to the second loading station. That proposal allows productivity to be increased, but it exhibits the drawback of the highly expensive need for carrying out a preselection of the articles in order to send them to the proper loading station.

In conclusion, in this field there is still felt the need of an apparatus that would overcome the performance limits of the presently known facilities, without requiring article presorting, or expensive apparatuses.

### Summary of the Invention

In order to solve the above-mentioned problem, the present invention proposes a transport dolly having rotary mats that are superimposed one above the other, there preferably being two pairs of such superimposed mats.

With such a dolly, no presorting of articles is needed, and from a construction point of view, the apparatus has approximately the same dimensions as similar apparatuses having single mats.

### Brief Description of the Drawing

The invention will now be described in connection with preferred embodiments thereof shown in the appended drawing wherein:
Fig. 1 schematically shows in a perspective view a dolly according to the invention;

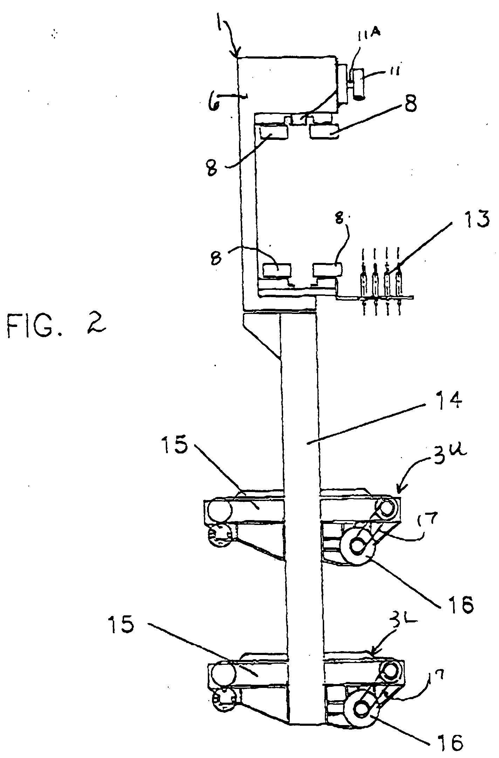

Fig. 2 is a side view of the dolly of Fig. 1;
Fig. 3 is a top plan view of the dolly of Fig. 1; and
Fig. 4 is a side view of a modified dolly.

### Detailed Description of Preferred Embodiments of the Invention

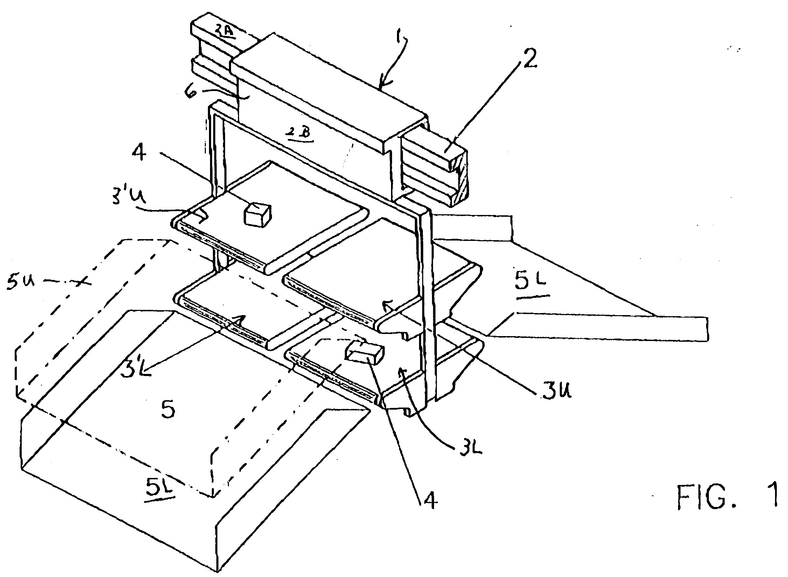

Referring now to Fig. 1, the apparatus according to the invention comprises a dolly 1 that moves along a fixed path preferably defined by a rail 2.

A first pair of vertically superimposed rotary mats, i.e., endless rotary belts, 3U, 3L is mounted on the dolly, and a second pair of vertically superimposed rotary mats, i.e., 3'U and 3'L is mounted on the dolly next to the first pair. Each of the mats forms a transport surface for an article 4.

Although two pairs of mats are depicted, only one pair could be provided if desired. Also, the depicted rail 2 is an elevated rail, with the dolly 1 suspended downwardly therefrom, but instead the rail could be a ground rail with the dolly projecting upwardly therefrom.

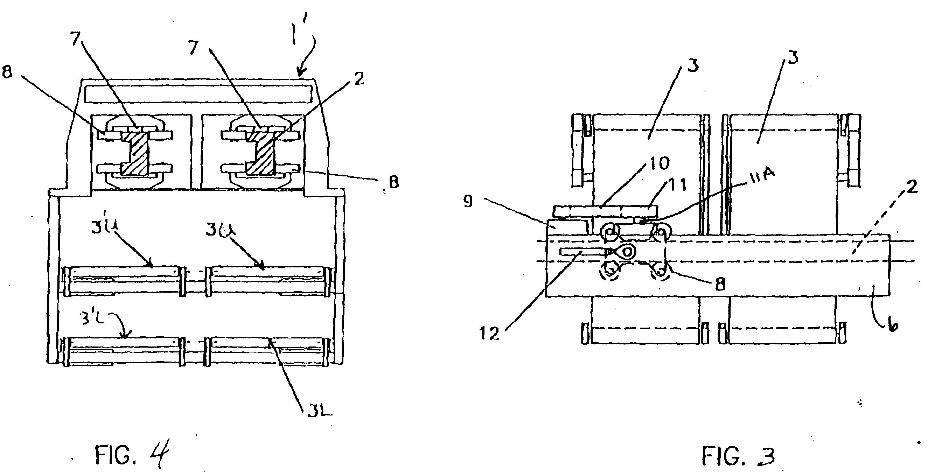

The articles 4 transported by the mats are discharged toward collection stations in the form of chutes 5. The dolly 1 includes a frame 6 provided with drive wheels 7, having horizontal axes, resting on the upper edge 2A of the rail 2, and also provided with guide wheels or idle wheels 8, having vertical axes, engaging the sides 2B of the rail. A motor 9 (Fig. 4) is mounted on the frame 6 and, through a belt 10, rotates a pulley 11 fitted to a drive shaft 11A. The drive shaft 11 rotates the drive wheels 7.

Depending on the configuration, a motor can be mounted on each dolly or it is possible to provide one motor for a plurality of dollies that are linked to one another by means of suitable tie rods 12 or the like (see Fig. 3).

The frame 6 carries bus bars 13 for making electrical connection with a power source supported by the rail 2 for supplying the necessary power to motor 12 and to the drive motors for the mats and the dollies, and partly for the transmission of data for controlling the operation of the apparatus. To each frame 6 a structure consisting of a pair of stanchions 14 or the like is fixed, with the rotary mats being mounted on the stanchions. The mats of each pair of mats are arranged in vertically superimposed relationship at such heiqhts as to be level with the mouths of respectively vertically superimposed collection devices 5U, 5L (e.g., chutes, containers, conveyor belts) that are arranged at the collection stations along the path of conveyance.

In particular, to the stanchions 14 a framework 15 for the support of the rotary mats is secured, said mats being each provided with a motor 16 that is also operated by power received from the bus bars 13 to rotate the mats by means of belts 17.

The superimposed mats will provide the possibility of discharging the articles 4 into separate vertically spaced collection devices at each collection station, with the mouths of the collection devices arranged in registry with respective ones of the mats. Alternatively, more than one of the articles can be discharged into the same collection device. In case the articles are to be discharged into scparate collection devices, an apparatus will be provided at the loading station that is able to load articles selectively onto the upper and lower dollies, depending on the collection device into which the articles are to be directed, which apparatus is described in concurrently filed Application Serial No. of Soldavini (Attorney Docket No. 024444-292), the disclosure of which is incorporated by reference herein.

It is also possible to provide collection devices that can direct an article toward either of two vertically spaced collection devices. Such collection devices could comprise hoppers that are provided with movable chutes, which hoppers are the object of concurrently filed Application Serial No. of Soldavini (Attorney Docket No. 024444-295), the disclosure of which is incorporated by reference herein.

The present apparatus operates as follows. At the moment of loading, the electronic system charged with handling the overall facility assigns to each article, according to its destination, the first empty mat which arrives at the loading station. Either the upper mat 3U or the lower mat 3L will be selected, depending on the configuration of the particular collection device, and the article will be automatically loaded onto that mat when it becomes in registry with the loading station. It is clear that if the collection station does not have separate collection devices at different levels, but rather has one collection device capable of carrying out a further selection of a conveying route so as to direct an article towards a selected collecting bin, regardless of whether it comes from the upper mat or the lower mat, the machine handling system will assign the article to the first empty mat at either level.

On the other hand, if the collection station has vertically spaced collecting devices, an article will be loaded onto either an upper or lower mat, depending on the intended destination. The dolly moves as the dragging motor 9 is powered from the bus bars 13. When the dolly passes in registry with the proper discharge station, the handling system sends a command through the bus bars 13 and actuates the motor 16 of the respective dolly in order to causc the mat on which the articles lies to rotate, the article thus being discharged into the proper collection bin. As is clear from the above description, this invention offers positive advantages because it allows, without changing the size of the facility, an almost double production to be obtained, without needing to increase the running speed of the dollies or use two separate machines.

Fig. 4 shows a modification similar to that described above, wherein the dolly 1' is mounted on two parallel rails 7, instead of on one rail.

A skilled artisan will be able to make various changes and variations that will all be enclosed within the scope of the present invention.

## Claims

1. A conveying apparatus for conveying articles along a path from a loading station to a selected one of a plurality of collection stations located along said path, said apparatus comprising a dolly movable along said path, said dolly including a frame and at least one pair of vertically superimposed driven endless belts, each of which is driven for loading and unloading articles.

2. The apparatus according to claim 1 wherein there are two of said pairs of endless belts disposed next to one another on the dolly.

3. The apparatus according to claim 1 further including a rail along which said dolly travels, the rail defining said path.

4. The apparatus according to claim 3 wherein said rail is elevated, and said dolly is suspended from said rail.

5. The apparatus according to claim 3 wherein said dolly carries a first motor for driving said dolly along said frame, and second and third motors for driving respective ones of said endless belts.

6. The apparatus according to claim 5 wherein each of said collection stations includes vertically superimposed collection devices for receiving articles from respective ones of said endless belts.

7. The apparatus according to claim 1 wherein said dolly carries a first motor for driving said dolly along said frame, and second and third motors for driving respective ones of said endless belts.

8. The apparatus according to claim 1 wherein each of said collection stations includes vertically superimposed collection devices for receiving articles from respective ones of said endless belts.
